# EUROPEAN PATENT APPLICATION

(11) **EP 4 371 856 A1**
(43) Date of publication of application: **22.05.2024**
(21) Application number: 23208709.8
(22) Date of filing: 09.11.2023
(51) Int. Cl.: B62D 5/09, B62D 1/22, B62D 5/093

(54) **STEERING APPARATUS WITH STEERING VALVE**

(30) Priority: 18.11.2022 IT 202200023787
(71) Applicant: OGNIBENE POWER S.P.A., 42124 Reggio Emilia (IT)
(72) Inventor: OGNIBENE, Claudio, 42121 REGGIO EMILIA (IT)
(74) Representative: Corradini, Corrado

(57) **Abstract**

A steering apparatus (100) for vehicles is disclosed, comprising: a hydraulic steering actuator (105); a hydrostatic steering unit (155) hydraulically connected to the steering actuator (105), a steering valve (230) hydraulically connected to the steering actuator (105) in parallel to the hydrostatic steering unit (155), and an electromechanical transducer (300) adapted to actuate the steering valve (230).

## Description

### Technical field

The present invention concerns a steering apparatus for vehicles, in particular for agricultural vehicles and/or heavy-duty vehicles, such as for example tractors or earthmoving machines.

### Prior art

A known steering apparatus for agricultural vehicles and/or heavy-duty vehicles provides that the wheels of the vehicle are steered by means of a hydraulic actuator, for example a double-acting hydraulic jack, connected to a hydrostatic steering unit (commonly called a hydroguide).

The hydrostatic steering unit normally comprises a rotary hydraulic distributor and a doser, which are both connected to and actuated by the steering wheel of the vehicle via a steering shaft.

When the steering wheel is actuated in one direction, the rotary hydraulic distributor moves into a configuration in which it is able to feed a pressurized hydraulic fluid, typically oil, into one of the two chambers of the double-acting jack, simultaneously connecting the other chamber for discharge.

In this way, the pressure difference between the two chambers actuates the plunger of the double-acting jack in the sense of progressively varying the steering angle of the wheels.

By reversing the direction of rotation of the steering wheel, the operation is the same, with the only difference that the rotary hydraulic distributor moves into a configuration such as to reverse the hydraulic connection between the two chambers of the double-acting jack, thus causing a steering of the wheels in the opposite direction with respect to the previous one.

In both cases, the doser present in the hydrostatic steering unit has the function of dosing the amount of oil that is fed inside the one or the other chamber, depending on the angle of rotation imparted to the steering shaft through the steering wheel.

When the steering wheel is stopped, the rotary hydraulic distributor moves into a neutral configuration such that the oil is not fed into any of the chambers of the hydraulic jack, which therefore keeps the wheels in the previously reached position.

Some steering apparatuses of this type are sometimes equipped with a further steering valve, which is connected to the hydraulic steering actuator (e.g. jack) in parallel with respect to the hydrostatic steering unit.

This steering valve is also generally adapted to assume two operating configurations, in each of which it can feed pressurized oil towards one of the operating chambers of the double-acting jack, simultaneously connecting the other for discharge.

To change the configuration of the steering valve, a hydraulic control circuit is currently used which, by appropriately exploiting the pressure of the incoming oil, is able to cause a movable member (e.g. slide or shuttle) of the steering valve to shift.

This hydraulic control circuit can be slaved to the user, for example through a joystick that allows a manual driving of the vehicle, and/or to an electronic control unit, which instead allows an autonomous driving, for example through geolocation systems.

However, the hydraulic control circuit of the steering valve inevitably represents a non-negligible complication of the overall hydraulic circuit of the vehicle, which generally results in higher costs and in greater set-up difficulties.

### Explanation of the invention

In the light of the foregoing, an object of the present invention is to solve or at least to mitigate the mentioned drawbacks of the prior art, in the context of a simple, rational and relatively low cost solution.

These and other objects are reached thanks to the characteristics of the invention as set forth in the independent claims. The dependent claims outline preferred and/or particularly advantageous aspects of the invention but not strictly necessary for implementing it. In particular, an embodiment of the present invention makes available a steering apparatus for vehicles, comprising:
- a hydraulic steering actuator;
- a hydrostatic steering unit hydraulically connected to the steering actuator,
- a steering valve hydraulically connected to the steering actuator in parallel to the hydrostatic steering unit, and
- an electromechanical transducer adapted to actuate the steering valve.

Thanks to this solution, the steering valve is configured as a solenoid valve or electro-actuated valve.

In fact, the mentioned electromechanical transducer converts electrical energy into mechanical energy that is actively applied to the steering valve, i.e. to its movable part(s) (e.g. slide or shuttle), in order to cause it to be actuated.

The steering valve is therefore actuated without using any hydraulic fluid and without any hydraulic control system, thereby simplifying the overall hydraulic circuit of the vehicle and making the actuation safer, more precise and immediately responsive.

The mechanical energy generated by the electromechanical transducer can be applied to the steering valve directly (like in the solenoid valves or in other electrically controlled valves) or by interposition of appropriate mechanical systems for converting and/or transmitting motion, typically formed by rigid bodies connected to each other (e.g. gears, levers or any other mechanism or kinematics).

One aspect of the present invention provides for example that the electromechanical transducer may comprise a rotary electric motor (e.g. stepper motor) and a mechanical transmission adapted to transform a rotary motion of the electric motor into a linear movement.

In particular, but not necessarily, the mechanical transmission may comprise at least one transmission system selected from the group consisting of: a pinion/rack system, a screw/lead screw system, a gear wheel/worm system.

Thanks to this solution, the electromechanical transducer is relatively inexpensive, while allowing a very precise and safe control of the steering valve.

Going into more detail now, an embodiment of the invention provides that the hydraulic steering actuator may comprise a double-acting jack provided with a cylinder and with a plunger adapted to subdivide the inner volume of the cylinder into a first and a second operating chamber.

In this way, by feeding a pressurized hydraulic fluid (e.g. oil) selectively into the first or second operating chamber, and by simultaneously placing the other for discharge, it is advantageously possible to actuate the plunger of the jack in two opposite directions, to which two possible steering directions of the wheels of the vehicle correspond. However, it is not excluded that, in other embodiments, the hydraulic steering actuator may be any other hydraulic motor, including those of the rotary type.

These hydraulic motors can also be effectively used to produce a steering of the wheels of the vehicle and are generally provided with at least two access mouths, whose connection with the feed and with the discharge of the hydraulic fluid (e.g. pressurized oil) can be reversed, to make them work in opposite directions.

Regardless of the type of hydraulic steering actuator, the steering valve can therefore comprise at least:
- an inlet port for a hydraulic fluid,
- an outlet port for the hydraulic fluid,
- a first connection port connected with the steering actuator,
- a second connection port connected with the steering actuator, and
- a movable shut-off member (e.g. slide or shuttle) actuatable by the electromechanical transducer between a plurality of operating positions, of which at least a first operating position, in which the shut-off member places the inlet port in hydraulic connection with the first connection port and the second connection port with the outlet port, and a second operating position, in which the shut-off member places the inlet port in hydraulic connection with the second connection port and the first connection port with the outlet port.

In this way, the steering valve, actuated by the electromechanical transducer, is effectively able to reverse the connection of the steering actuator with the inlet and the outlet of the hydraulic fluid, allowing the steering actuator to work in both directions. According to one aspect of the invention, the operating positions of the shut-off member may also include a neutral position in which the shut-off member closes the communication between the inlet port and each of the connection ports, as well as the communication between each of the connection ports and the outlet port.

Thanks to the possibility of assuming this neutral position, the steering valve is also able to prevent any flow of hydraulic fluid towards the steering actuator from occurring through it.

Moving to the hydrostatic steering unit, it can comprise at least a distributor and a doser, for example both of a rotary type and actuated by the same steering shaft.

In this way, the hydrostatic steering unit assumes the conformation of a typical hydroguide, which allows an effective control of the hydraulic steering actuator by the driver, even when the steering valve outlined above is not used.

To effectively perform this function, the hydrostatic steering unit may in particular comprise at least:
- an inlet port for a hydraulic fluid,
- an outlet port for the hydraulic fluid,
- a first connection port hydraulically connected with the steering actuator, and
- a second connection port hydraulically connected with the steering actuator;

the distributor being adapted to assume a plurality of operating configurations, of which a first operating configuration, in which it places the inlet port in hydraulic connection with the first connection port and the outlet port with the second connection port, and a second operating configuration, in which it places the inlet port in hydraulic connection with the second connection port and the outlet port with the first connection port,
the dosing device being adapted to dose the amount of hydraulic fluid transferred from the inlet port towards the first or second connection port, when the distributor is in the first or second operating configuration.

In this way, the hydrostatic steering unit is effectively able to reverse the connection of the steering actuator with the inlet and the outlet of the hydraulic fluid, allowing the steering actuator to work in both directions.

In some embodiments, the operating configurations of the distributor may also comprise a neutral configuration in which said distributor closes the communication between the inlet port and each of the connection ports, as well as the communication between each of the connection ports and the outlet port.

Thanks to this neutral position (commonly known as the "closed centre" position), the hydrostatic steering unit is also able to prevent any flow of hydraulic fluid towards the steering actuator from occurring through it.

According to one aspect of the invention, the hydrostatic steering unit may further comprise an amplification line placed between the connection ports and the inlet port, in parallel to the dosing device, and comprising a flow regulating device of electro-actuated type.

In this way, a particularly versatile steering apparatus is made available thanks to the amplification branch which, being able to be controlled based on the condition of use of the vehicle, allows to increase the flow rate of hydraulic fluid towards the steering actuator and, therefore, to reduce the number of rotations that must be imparted to the dosing device, to make the wheels assume a preset steering angle.

### Brief description of the drawings

Further features and advantages of the invention will be more apparent after reading the following description provided by way of a non-limiting example, with the aid of the accompanying drawings.
Figure 1 is a diagram of a steering apparatus according to an embodiment of the present invention.
Figure 2 is a detail of the diagram of Figure 1 showing the hydraulic steering actuator.
Figure 3 is a detail of Figure 1 showing the hydrostatic steering unit.
Figure 4 is a detail of Figure 1 showing the steering valve.
Figure 5 is a detail of Figure 1 showing a priority flow valve.
Figure 6 is a detail of Figure 1 showing a selector valve.
Figure 7 is a diagram of a steering apparatus compliant with a second embodiment of the invention.
Figure 8 is a detail of Figure 7 showing the hydrostatic steering unit.
Figure 9 is a diagram of a steering apparatus according to a third embodiment of the present invention.
Figure 10 is a diagram of a steering apparatus according to a fourth embodiment of the present invention.

### Detailed description

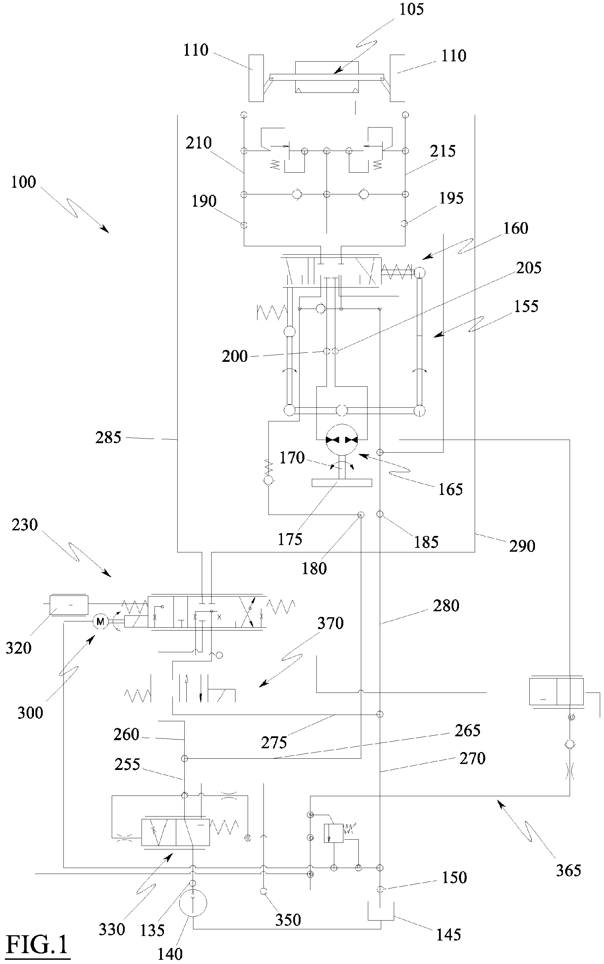

From Figure 1 it can be seen a steering apparatus 100 for self-propelled vehicles, in particular for agricultural vehicles and/or heavy-duty vehicles adapted to move at low speed (typically below 60 km/h), such as for example agricultural tractors or earthmoving machines.

The steering apparatus 100 comprises first of all a hydraulic steering actuator 105, which is adapted to be connected to steering wheels 110 of the vehicle, so as to cause them to steer.

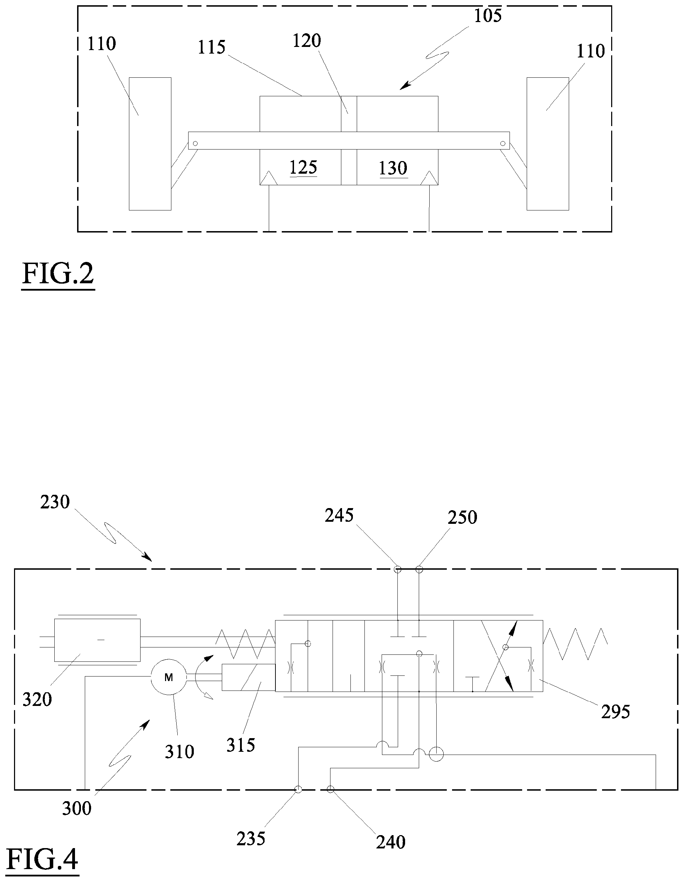

In the illustrated example, the hydraulic steering actuator 105 is a double-acting jack, which is provided with a cylinder 115 and with a relative plunger 120 which subdivides the inner volume of the cylinder 115 into two separate operating chambers 125 and 130 (see fig. 2).

The plunger 120 of the hydraulic jack may comprise two opposite stems, which are arranged parallel to the axis of the cylinder 115, preferably coaxial with the latter.

Each of these stems protrudes outside the cylinder 115 and can be mechanically connected to a respective steering wheel 110 by means of suitable levers adapted to transform the axial movement of the stem into a rotation of the steering wheel 110 around a preset steering axis.

Thereby, each displacement of the plunger 120, in one direction or in the opposite direction, corresponds to a change in the steering angle of both steering wheels 110.

In other embodiments, the double-acting jack could be replaced by any other hydraulic motor, including those of the rotary type, that can be connected with the steering wheels 110 of the vehicle to cause them to steer in both directions.

The steering apparatus 100 may further comprise a plurality of hydraulic connection ports, of which at least one feed port 135 and one return port 150.

The feed port 135 is adapted to receive at the inlet a hydraulic fluid, typically an incompressible fluid (e.g. oil).

The hydraulic fluid reaching the feed port 135 is a pressurized hydraulic fluid, i.e. at a pressure higher (preferably much higher) than the ambient pressure.

For example, the feed port 135 can be connected with the delivery conduit of a pump 140, for example a piston positive-displacement pump actuated by the motor of the vehicle, which can be adapted to withdraw the hydraulic fluid from a tank 145 and send it under pressure (pump it) towards the feed port 135.

The return port 150 can instead be placed for the discharge, for example in direct communication with the mentioned tank 145.

The steering apparatus then comprises a hydrostatic steering unit 155, which may generally comprise a distributor 160 and at least one dosing device 165.

The distributor 160 and the dosing device 165 can be both devices of rotary type which are actuated by the same steering shaft 170, which can be provided with a steering wheel 175 or with another suitable manual steering member of the vehicle.

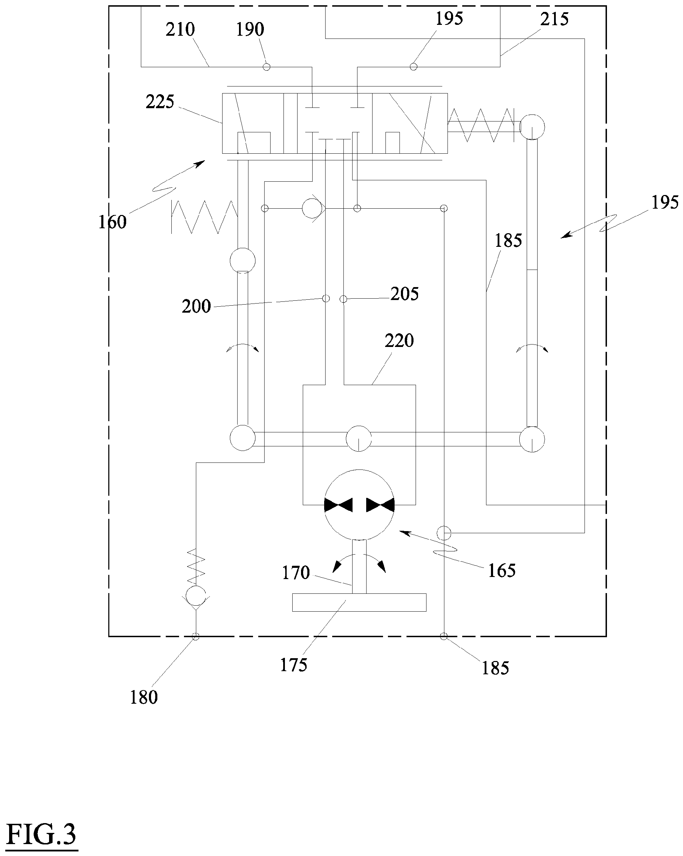

With particular reference to Figure 3, the distributor 160 may comprise an inlet port 180, an outlet port 185, two connection ports, of which a first connection port 190 and a second connection port 195, and two service ports, of which a first service port 200 and a second service port 205.

All of these ports may be obtained in an outer casing of the hydrostatic steering unit 155 (not illustrated).

The inlet port 180 can be hydraulically connected to the feed port 135, so that it can receive the pressurized hydraulic fluid.

The outlet port 185 may be hydraulically connected to the return port 150, so that it can discharge.

The first connection port 190 may be hydraulically connected to the steering actuator 105, for example to the first operating chamber 125 of the double-acting jack.

The second connection port 195 may also be hydraulically connected to the steering actuator 105, for example to the second operating chamber 130 of the double-acting jack. In particular, the first connection port 190 may be connected with the steering actuator 105 via a first intake conduit 210, while the second connection port 195 may be connected with the steering actuator 105 via a second and different intake conduit 215.

The two service ports 200 and 205 can be mutually connected via a hydraulic branch conduit 220, along which the dosing device 165 can be placed.

The distributor 160, which in the drawings is schematized as a slide or linear valve, is generally adapted to assume a plurality of different operating configurations.

More precisely, the distributor 160 is generally provided with at least one movable part (schematically indicated with 225) that can change position in response to the rotation of the steering shaft 170, so that the different positions assumed by the movable part 225 correspond to the aforementioned operating configurations of the distributor 160. Indeed, in a first of these operating configurations (movable part 225 shifted to the right with respect to Figure 3), the distributor 160 simultaneously realizes the following hydraulic connections:
- the inlet port 180 with the second service port 205;
- the first service port 200 with the first connection port 190; and
- the second connection port 195 with the outlet port 185.

In this way, the incoming hydraulic fluid is conveyed to the dosing device 165 and from here to the hydraulic steering actuator 105 through the first intake conduit 210, while the second intake conduit 215 is connected for discharge.

In the illustrated example, the dosing device 165 is therefore able to feed a certain amount of pressurized hydraulic fluid into the first operating chamber 125 of the double-acting jack, which causes a displacement of the plunger 120 in the sense of reducing the volume of the second operating chamber 130 (to the right in Figure 2).

In a second operating configuration (movable part 225 shifted to the left with respect to Figure 3), the distributor 160 simultaneously realizes the following hydraulic connections:
- the inlet port 180 with the first service port 200;
- the second service port 205 with the second connection port 195; and
- the first connection port 190 with the outlet port 185.

In this way, the incoming hydraulic fluid is conveyed to the dosing device 165 and from here to the hydraulic steering actuator 105 through the second intake conduit 215, while the first intake conduit 210 is connected for discharge.

In the illustrated example, the dosing device 165 is therefore able to feed a certain amount of pressurized hydraulic fluid into the second operating chamber 130 of the double-acting jack, which causes a displacement of the plunger 120 in the sense of reducing the volume of the first operating chamber 125 (to the left in Figure 2).

By shifting between these first and second operating configurations, the distributor 160 can also assume a third operating configuration, called a neutral configuration and illustrated in Figure 3.

In the neutral configuration, the distributor 160 may close the communication between the inlet port 180 and each of the connection ports 190 and 195, as well as to close the communication between each of the connection ports 190 and 195 and the outlet port 185.

In the illustrated example, the distributor 160 in the neutral configuration may also close the communication of each service port 200 and 205 with all the other ports.

However, it is not excluded that, in other embodiments, when the distributor 160 is in a neutral configuration, the service ports 200 and 205 can be respectively connected with the first connection port 190 and with the second connection port 195, so that any displacements of the steering wheels 110, due to outer forces, can be transmitted hydraulically to the dosing device 165 and from here to the steering wheel 175.

As anticipated, the distributor 160 and the dosing device 165 may be of the rotary type.

For example, the dosing device 165 can be conformed as a sort of positive-displacement gear pump, commonly called "gerotor", which comprises an inner gearwheel that meshes with an outer toothed crown, in which the gear wheel is slightly offset with respect to the toothed crown and is directly keyed to the steering shaft 170 that carries the steering wheel 175.

The distributor 160 may instead comprise two cylinders coaxially inserted into each other, of which an inner cylinder directly keyed to the steering shaft 170 and an outer cylinder adapted to rotate with respect to the inner cylinder by a limited angle in both directions.

When the steering wheel 175 is stationary, the outer cylinder of the distributor 160 is in a certain angular position with respect to the inner cylinder, which corresponds to the neutral configuration.

At the moment in which the steering wheel 175 is actuated in either direction, the inner cylinder of the distributor makes a small rotation with respect to the outer cylinder and moves into an angular position that corresponds, for example, to the first operating configuration.

In this way, by continuing to rotate the steering wheel 175 in the same direction, the dosing device 165 transfers to the first intake conduit 210 an amount of pressurized hydraulic fluid that is proportional to the rotation made by the inner gear wheel of the gerotor and therefore by the steering wheel 175, thus actuating the hydraulic steering actuator 105 in one direction.

When the steering wheel 175 is stopped, the outer cylinder of the distributor 160 returns to the central position by means of appropriate spring systems, interrupting the flow of pressurized hydraulic fluid and therefore stopping the hydraulic steering actuator 105. By reversing the direction of rotation of the steering wheel 175, the operation of the hydrostatic steering unit 155 is the same, with the only difference that the inner cylinder of the distributor 160 moves into an angular position that corresponds, for example, to the second operating configuration.

In this way, by continuing to rotate the steering wheel 175 in the same direction, the dosing device 165 transfers to the second intake conduit 215 an amount of pressurized hydraulic fluid that is proportional to the rotation made by the inner gear wheel of the gerotor and therefore by the steering wheel 175, thus actuating the hydraulic steering actuator 105 in the opposite direction to the previous one.

In addition to what has been described so far, the steering apparatus 100 also comprises a steering valve 230.

As illustrated in Figure 4, the steering valve 230 may comprise an inlet port 235, an outlet port 240, a first connection port 245, and a second connection port 250.

All of these ports may be obtained in an outer casing defining the body of the steering valve 230.

The steering valve 230 is hydraulically connected to the steering actuator 105 in parallel to the hydrostatic steering unit 155, i.e. in parallel to both the distributor 160 (to the entire distributor 160) and to the dosing device 165 (to the entire dosing device 165).

In practice, the steering valve 230 is adapted to feed and discharge pressurized hydraulic fluid to/from the steering actuator 105, without said hydraulic fluid having to pass through the hydrostatic steering unit 155, i.e. independently from the latter.

To this end, the inlet port 235 of the steering valve 230 is hydraulically connected to the feed port 135, so that it can receive the pressurized hydraulic fluid.

The outlet port 240 is hydraulically connected to the return port 150, so that it can discharge.

The first connection port 245 is hydraulically connected to the hydraulic steering actuator 105, for example to the first operating chamber 125 of the double-acting jack.

The second connection port 250 is also hydraulically connected to the hydraulic steering actuator 105, for example to the second operating chamber 130 of the double-acting jack. More specifically, as illustrated in Figure 1, the feed port 135 of the steering apparatus 100 may control a feed conduit 255 that branches off into two branches 260 and 265 leading respectively into the inlet port 235 of the steering valve 230 and into the inlet port 180 of the hydrostatic steering unit 155.

The return port 150 can control a discharge conduit 270 that branches off into two branches 275 and 280 coming respectively from the outlet port 240 of the steering valve 230 and from the outlet port 185 of the hydrostatic steering unit 155.

The first connection port 245 of the steering valve 230 can control a third intake conduit 285 that leads into the first intake conduit 210 of the hydrostatic steering unit 155, or directly into the first operating chamber 125 of the jack.

The second connection port 250 of the steering valve 230 can control a fourth intake conduit 290 that leads into the second intake conduit 215 of the hydrostatic steering unit 155, or directly into the second operating chamber 130 of the jack.

Returning to Figure 4, the steering valve 230 is also provided with at least one movable shut-off member 295 which, by changing position with respect to a fixed part of the steering valve 230, for example with respect to the valve body, is able to assume different operating positions.

In the illustrated embodiment, the steering valve 230 is a linear valve, i.e. in which the shut-off member 295, which may be configured as a slide or a spool, is adapted to slide with respect to the fixed part in a straight direction.

It is not excluded, however, that in other embodiments, the steering valve 230 may be of the rotary or other type.

In any case, in a first operating position (shut-off member 295 shifted to the right with respect to Figure 4), the shut-off member 295 places the inlet port 235 in hydraulic connection with the first connection port 245 and, at the same time, places the second connection port 250 in hydraulic connection with the outlet port 240.

In this way, the steering valve 230 is adapted to send pressurized hydraulic fluid to the steering actuator 105 through the third intake conduit 285, while discharging at the same time the hydraulic fluid coming from the fourth intake conduit 290.

In the illustrated example, the steering valve 230 is therefore able to send a certain amount of pressurized hydraulic fluid into the first operating chamber 125 of the double-acting jack, causing a displacement of the plunger 120 in the sense of reducing the volume of the second operating chamber 130 which is connected for discharge.

In a second operating position (shut-off member 295 shifted to the left with respect to Figure 4), the shut-off member 295 places the inlet port 235 in hydraulic connection with the second connection port 250 and, at the same time, places the first connection port 245 in hydraulic connection with the outlet port 240.

In this way, the steering valve 230 is adapted to send pressurized hydraulic fluid to the steering actuator 105 through the fourth intake conduit 290, while discharging at the same time the hydraulic fluid coming from the third intake conduit 285.

In the illustrated example, the steering valve 230 is therefore able to send a certain amount of pressurized hydraulic fluid into the second operating chamber 130 of the double-acting jack, causing a displacement of the plunger 120 in the sense of reducing the volume of the first operating chamber 125 which is connected for discharge.

By shifting between these first and second operating positions, the shut-off member 295 can also assume a third operating position, called neutral position.

In this neutral position, the shut-off member 295 may close the communication between the inlet port 235 and each of the connection ports 245 and 250, as well as to close the communication between each of the connection ports 245 and 250 and the outlet port 240.

According to an important aspect of the invention, the steering valve 230 can be actuated (only) by a (single) electromechanical transducer 300 which, specifically, can be adapted to actively shift the shut-off member 295 between the various operating positions.

In other words, the steering valve 230 may be considered a solenoid valve or an electro-actuated valve.

For example, the steering valve 230 can comprise spring means, typically two counteracting springs 305, which can keep the shut-off member 295 normally in neutral position, and the electromechanical transducer 300 can be adapted to shift the shut-off member 295, starting from said neutral position, back and forth towards the first operating position and towards the second operating position.

In practice, the electromechanical transducer 300 is adapted to convert electrical energy into mechanical energy, which is actively applied to the steering valve 230, i.e. to the shut-off member 295, so as to cause the actuation/displacement thereof.

The steering valve 230, i.e. the shut-off member 295, is therefore actuated without using any hydraulic fluid and without providing any hydraulic control system.

In some embodiments, the mechanical energy generated by the electromechanical transducer 300 can be applied to the steering valve 230, i.e. to the shut-off member 295, directly.

For example, the electromechanical transducer 300 could comprise a solenoid wound around a metal portion of the shut-off member 295 or of an extension thereof which, by being powered by electric current, is adapted to generate a magnetic field capable of shifting the shut-off member 295 towards the first operating position or, for example reversing the direction of the electric current and therefore of the induced magnetic field, towards the second operating position.

In other embodiments, the mechanical energy generated by the electromechanical transducer 300 can be applied to the steering valve 230, i.e. to the shut-off member 295, indirectly, i.e. by interposition of appropriate mechanical systems for converting and/or transmitting motion that can be formed by rigid bodies suitably connected to each other (e.g. gears, levers or any other mechanism or kinematics).

For example, the electromechanical transducer 300 illustrated in the drawings may comprise a rotary electric motor 310 (e.g. stepper motor) and a mechanical transmission 315 adapted to transform the rotary motion generated by the electric motor 310 into a linear movement of the steering valve 230, i.e. of the shut-off member 295.

In particular, but not necessarily, the mechanical transmission 315 may comprise at least one transmission system selected from the group consisting of: a pinion/rack system, a screw/lead screw system, a gear wheel/worm system.

In any case, thanks to the electromechanical transducer 300 that acts on the shut-off member 295, directly or through purely mechanical transmissions, the actuation of the steering valve 230 is particularly safe, precise and immediately responsive.

A position sensor 320, which is configured to detect the operating position occupied by the shut-off member 295, may then be associated with the steering valve 230 outlined above.

The position sensor 320 may be connected to an electronic control unit (not illustrated), which may in turn be connected to the electromechanical transducer 300.

This electronic control unit can then be configured to control the operation of the electromechanical transducer 300, so as to shift the shut-off member 295 of the steering valve 230 into the various operating positions depending on the needs.

For example, the electronic control unit can be configured to perform autonomous driving functions, in particular to shift the shut-off member 295 so that the hydraulic steering actuator 105 drives the steering wheels 110 in a series of pre-established orientations that require the vehicle to travel a certain trajectory.

This trajectory can be established by a program based on the position of the vehicle on the ground, which can in turn be detected by a geolocation system, for example but not exclusively of the GPS type.

Alternatively, or in addition thereto, the operation of the electromechanical transducer 300 can be enslaved/controlled by a joystick or any other manual member that can be handled by the driver and that, through direct connection or through the electronic control unit, allows the driver to manually shift the shut-off member 295 of the steering valve 230 and therefore to drive the vehicle.

In addition to what has been described so far, the steering apparatus 100 may also comprise a priority flow valve 330, which is positioned along the feed conduit 255 that conveys the pressurized hydraulic fluid from the feed port 135 towards the inlet ports 180 and 235 respectively of the hydrostatic steering unit 155 and of the steering valve 230.

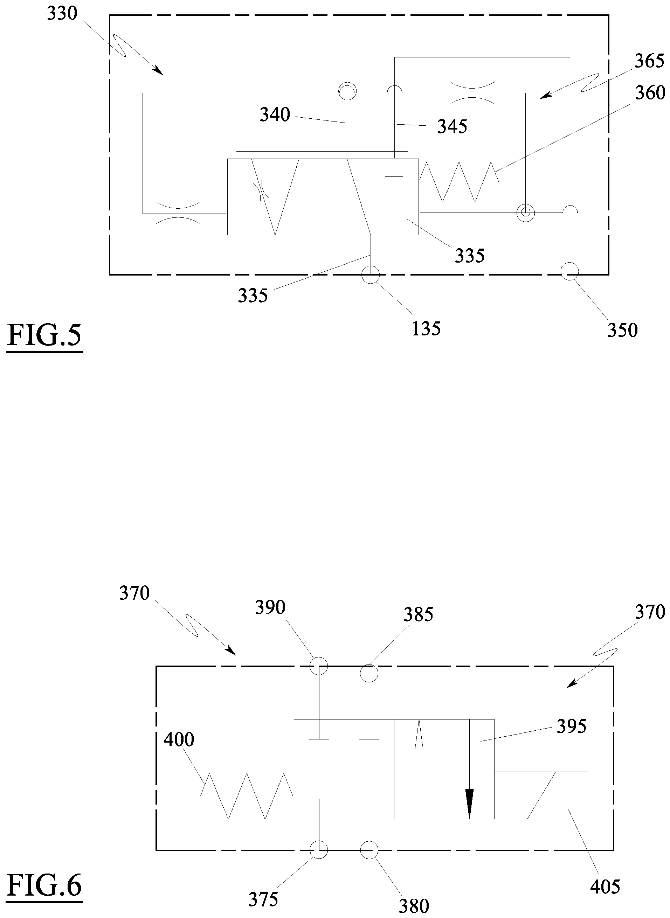

As illustrated in Figure 5, the priority valve 330 may comprise an inlet port 335 hydraulically connected with the feed port 135 and two outlet ports, of which a first outlet port 340 hydraulically connected with the steering valve 230 and with the hydrostatic steering unit 155 through the branches 260 and 265 of the feed conduit 255, and a second outlet port 345 hydraulically connected with a secondary port 350 to which some other users of the vehicle on which the steering apparatus 100 is installed may be connected.

The priority valve 330 may then comprise a shut-off member 355, for example a slide or a spool, which is movable (e.g. slidable) with respect to a fixed part of the priority valve 330, typically with respect to the valve body, between at least two operating positions.

In the first operating position (illustrated in Figure 5), the shut-off member 355 is adapted to place the inlet port 335 in communication only with the first outlet port 340, so that the entire flow rate of hydraulic fluid coming under pressure from the feed port 135 is sent towards the steering valve 230 and towards the hydrostatic steering unit 155.

In the second operating position, the shut-off member 355 (which is shifted to the right with respect to what is illustrated in Figure 5) is adapted to place the inlet port 335 in communication with both the first outlet port 340 and the second outlet port 350, so that at least a part of the flow rate of hydraulic fluid coming under pressure from the feed port 135 is also sent to the secondary users.

The priority valve 330 can therefore comprise a spring 360 adapted to push the shut-off member 355 into the first operating position and can be in communication with the hydrostatic steering unit 155 by means of a load sensing hydraulic circuit 365, which is configured so that, when the flow rate of hydraulic fluid coming from the feed port 135 is above a certain threshold, the shut-off member 355 is pushed into the second operating position in contrast to the action of the spring 360.

The steering apparatus 100 may further comprise a selector valve 370 operatively interposed between the priority valve 330 (if any) and the steering valve 230.

As illustrated in Figure 6, the selector valve 370 may comprise a first inlet port 375 hydraulically connected with the branch 260 of the feed conduit 255, a first outlet port 380 hydraulically connected with the discharge conduit 270, a second inlet port 385 hydraulically connected with the outlet port 240 of the steering valve 230, and a second outlet port 390 hydraulically connected with the inlet port 235 of the steering valve 230.

The selector valve 370 can therefore comprise a shut-off member 395, for example a slide or a shuttle, which is movable (e.g. slidable) with respect to a fixed part of the selector valve 370, typically with respect to the valve body, between at least two operating positions.

In the first operating position (illustrated in Figure 6), the shut-off member 395 is adapted to close all the inlet 375 and 385 and outlet ports 380 and 390 of the selector valve 370. In the second operating position, the shut-off member 395 (which is shifted to the left with respect to what is illustrated in Figure 6) is adapted to place the first inlet port 375 in communication with the second outlet port 390 and, at the same time, to place the second inlet port 385 in communication with the first outlet port 380.

The selector valve 370 can therefore comprise a spring 400 adapted to push the shut-off member 395 into the first operating position and an electromechanical transducer 405, for example a solenoid, adapted to push the shut-off member 395 into the second operating position in contrast to the action of the spring 400.

The electromechanical transducer 405 can be activated, by bringing the shut-off member 395 into the second operating position, when it is wished to operate the steering of the vehicle by means of the steering valve 230.

The activation of the electromechanical transducer 405 can be delegated to the electronic control unit, automatically (based on a program) and/or upon manual command of the driver.

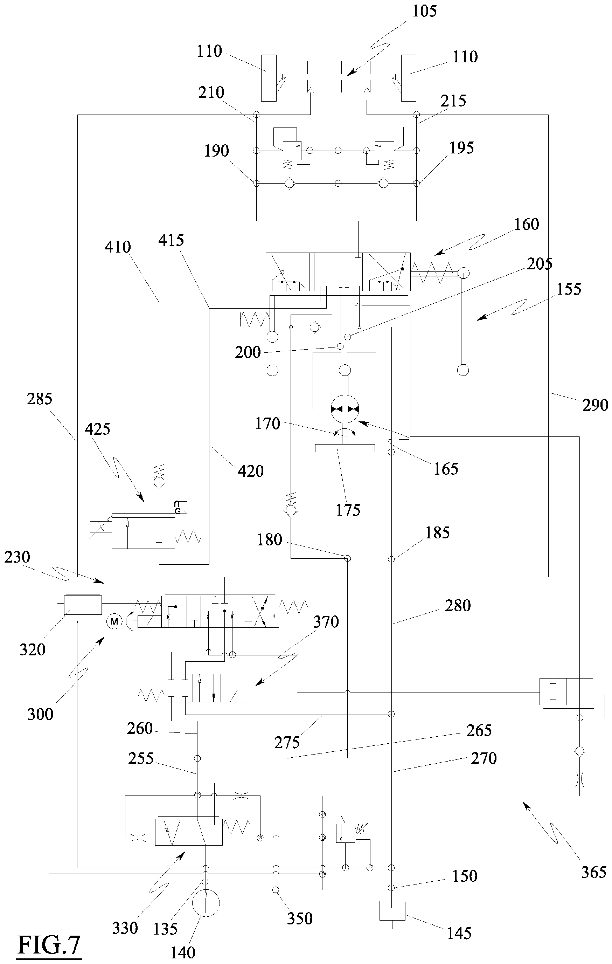

The steering apparatus 100 illustrated in the diagram of Figure 7 is entirely similar to the one described with reference to the diagram of Figure 1 except for what is set out below. In compliance with the diagram of Figure 7, the distributor 160 of the hydrostatic steering unit 155 may comprise two auxiliary hydraulic ports, of which a first auxiliary port 410 and a second auxiliary port 415.

These two auxiliary ports 410 and 415 are mutually connected by a hydraulic amplification line 420, which can be intercepted by a flow regulating valve 425, preferably of an electro-actuated type.

The flow regulating valve 425 is substantially a hydraulic device configured to vary the passage area available to the hydraulic fluid crossing it.

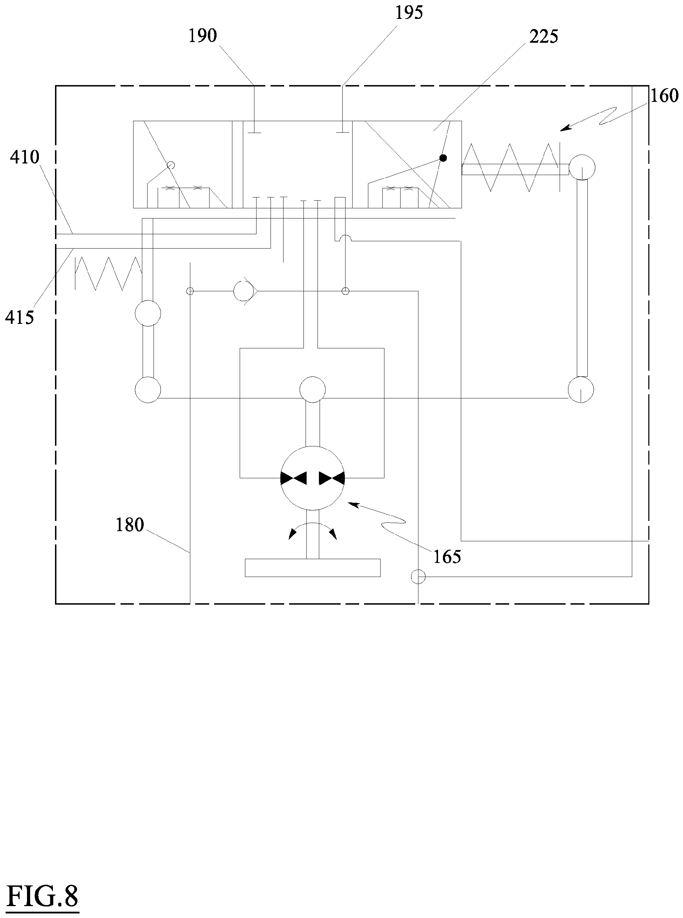

As illustrated in Figure 8, the movable portion 225 of the distributor 160 is then configured so that, when the distributor 160 is in the neutral configuration, both the auxiliary ports 410 and 415 can be closed.

In this way, the hydraulic liquid in the amplification line 420 remains still.

The movable part 225 of the distributor 160 can then be configured so that, when the latter is in the first operating configuration (movable part 225 shifted to the right with respect to Figure 8), the first auxiliary port 410 is in communication with the first connection port 190 and, at the same time, the second auxiliary port 415 is connected with the inlet port 180, in parallel with the dosing device 165.

In this way, through the amplification line 420, the steering actuator 105, in this case the first chamber 125 of the double-acting jack, receives an amount of hydraulic fluid coming directly from the inlet port 180, and possibly dosed by the flow regulating valve 425, which is added to the one fed by the dosing device 165.

The greater amount of hydraulic liquid reaching the first chamber 125 therefore allows to increase, with the same revolutions imparted to the steering wheel 175, the stroke of the plunger 120 to the right (with respect to Figure 2) and, consequently, the corresponding angular displacement of the steering wheels.

The movable part 225 of the distributor 160 can finally be configured so that, when the latter is in the second operating configuration (movable part 225 shifted to the left with respect to Figure 8), the first auxiliary port 410 is in communication with the second connection port 195 and, at the same time, the second auxiliary port 415 is still connected with the inlet port 180, in parallel with the dosing device 165.

In this way, through the amplification line 420, the steering actuator 105, but in this case the second chamber 130 of the double-acting jack, receives an amount of hydraulic fluid coming directly from the inlet port 180, and possibly dosed by the flow regulating valve 425, which is added to the one fed by the dosing device 165.

Also in this case, therefore, the greater amount of hydraulic liquid reaching the second chamber 130 allows to increase, with the same revolutions imparted to the steering wheel 175, the stroke of the plunger 120, but this time to the left (with respect to the image of Figure 2) and, consequently, the corresponding angular displacement of the steering wheels.

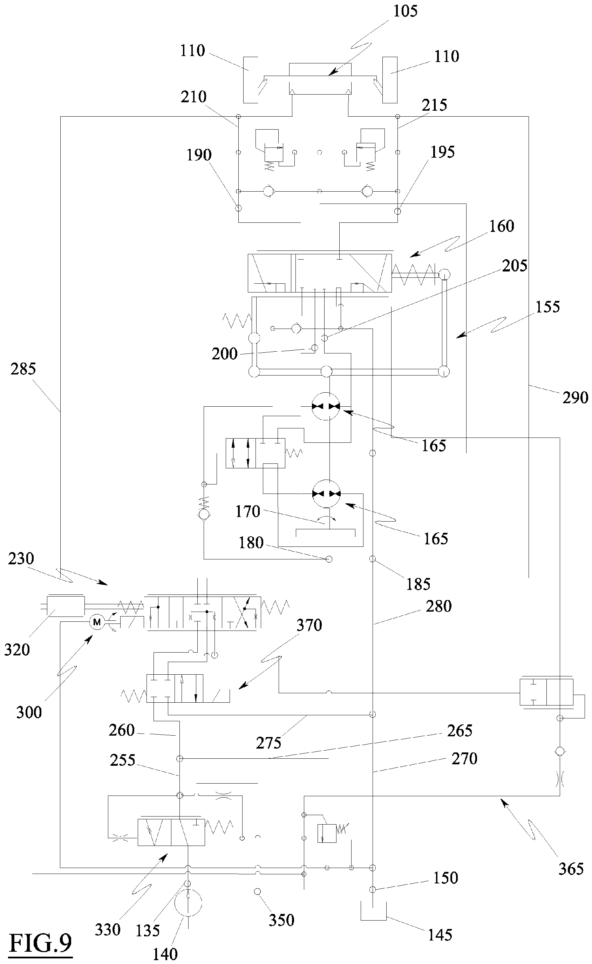

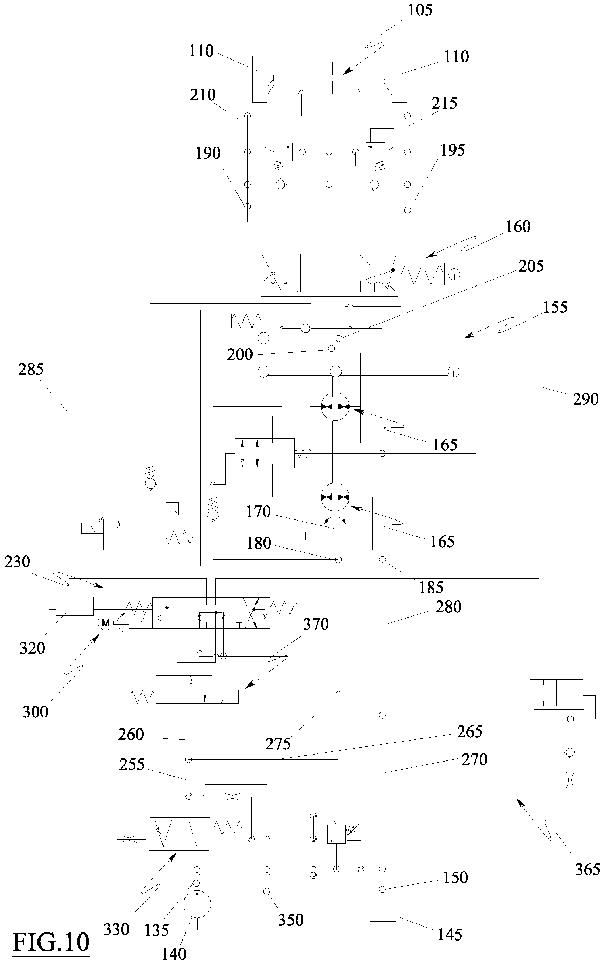

The steering apparatuses 100 illustrated in the diagrams of Figure 9 and of Figure 10 are entirely similar to those described with reference respectively to the diagram of Figure 1 and to the diagram of Figure 2, with the only difference that, in these further embodiments, the hydrostatic steering unit 155 comprises two dosing devices 165 connected substantially in parallel.

Obviously, a person skilled in the art will be able to make numerous technical-applicative modifications to all that above, without thereby departing from the scope of the invention as hereinbelow claimed.

## Claims

1. A steering apparatus (100) for vehicles, comprising:
- a hydraulic steering actuator (105),
- a hydrostatic steering unit (155) hydraulically connected to the steering actuator (105),
- a steering valve (230) hydraulically connected to the steering actuator (105) in parallel to the hydrostatic steering unit (155),
**characterized in that** it comprises an electromechanical transducer (300) adapted to actuate the steering valve (230).

2. A steering apparatus (100) according to claim 1, wherein the electromechanical transducer (300) comprises a rotary electric motor (310) and a mechanical transmission (315) adapted to transform a rotary motion of the electric motor (310) into a linear movement.

3. A steering apparatus (100) according to claim 2, wherein the mechanical transmission comprises at least one transmission system selected from the group consisting of: a pinion/rack system, a screw/lead screw system, a gear wheel/worm system.

4. A steering apparatus (100) according to any one of the preceding claims, wherein the steering valve (230) comprises at least:
- an inlet port (235) for a hydraulic fluid,
- an outlet port (240) for the hydraulic fluid,
- a first connection port (245) connected with the steering actuator (105),
- a second connection port (250) connected with the steering actuator (105), and
- a movable shut-off member (295) actuatable by the electromechanical transducer (300) between a plurality of operating positions, of which at least a first operating position, in which the shut-off member (295) places the inlet port (235) in hydraulic connection with the first connection port (245) and the second connection port (250) with the outlet port (240), and a second operating position, in which the shut-off member (295) places the inlet port (235) in hydraulic connection with the second connection port (250) and the first connection port (245) with the outlet port (240).

5. A steering apparatus (100) according to claim 4, wherein the operating positions of the shut-off member (295) also comprise a neutral position in which the shut-off member (295) closes the communication between the inlet port (235) and each of the connection ports (245, 250), as well as the communication between each of the connection ports (245, 250) and the outlet port (240).

6. A steering apparatus (100) according to any one of the preceding claims, wherein the hydrostatic steering unit (155) comprises at least one distributor (160) and a dosing device (165).

7. A steering apparatus (100) according to claim 6, wherein the hydrostatic steering unit (155) comprises at least:
- an inlet port (180) for a hydraulic fluid,
- an outlet port (185) for the hydraulic fluid,
- a first connection port (190) hydraulically connected with the steering actuator (105), and
- a second connection port (195) hydraulically connected with the steering actuator (105);
the distributor (160) being adapted to assume a plurality of operating configurations, of which a first operating configuration, in which it places the inlet port (180) in hydraulic connection with the first connection port (190) and the outlet port (185) with the second connection port (195), and a second operating configuration, in which it places the inlet port (180) in hydraulic connection with the second connection port (195) and the outlet port (185) with the first connection port (190),
the dosing device (165) being adapted to dose the amount of hydraulic fluid transferred from the inlet port (180) towards the first or second connection port (190, 195), when the distributor (160) is in the first or second operating configuration.

8. A steering apparatus (100) according to claim 7, wherein the operating configurations of the distributor (160) also comprise a neutral configuration in which said distributor (160) closes the communication between the inlet port (180) and each of the connection ports (190, 195), as well as the communication between each of the connection ports (190, 195) and the outlet port (185).

9. A steering apparatus (100) according to claim 7 or 8, wherein the hydrostatic steering unit (155) comprises an amplification line (420) placed between the connection ports (190, 195) and the inlet port (180), in parallel to the dosing device (165), and comprising a flow regulating device (425) of electro-actuated type.

10. A steering apparatus (100) according to any one of the preceding claims, wherein the hydraulic steering actuator (105) comprises a double-acting hydraulic jack provided with a cylinder (115) and with a plunger (120) adapted to subdivide the inner volume of the cylinder (115) into a first and a second operating chamber (125, 130).

11. A steering apparatus (100) according to claim 4 and 7, further comprising:
- a feed port (135),
- a return port (150),
wherein the feed port (135) controls a feed conduit (255) that branches off into two branches (260) and (265) leading respectively into the inlet port (235) of the steering valve (230) and into the inlet port (180) of the hydrostatic steering unit (155).
wherein the return port (150) controls a discharge conduit (270) that branches off into two branches (275, 280) coming respectively from the outlet port (240) of the steering valve (230) and from the outlet port (185) of the hydrostatic steering unit (155).
wherein the steering apparatus (100) further comprises a selector valve (370), which comprises:
- a first inlet port (375) hydraulically connected with the branch (260) of the feed conduit (255) leading into the inlet port (235) of the steering valve (230),
- a first outlet port (380) hydraulically connected with the discharge conduit (270),
- a second inlet port (385) hydraulically connected with the outlet port (240) of the steering valve (230),
- a second outlet port (390) hydraulically connected with the inlet port (235) of the steering valve (230),
- a shut-off member (395) movable with respect to a fixed part of the selector valve (370) between at least two operating positions, of which a first operating position, in which the shut-off member (395) is adapted to close all the inlet (375, 385) and outlet (380, 390) ports of the selector valve (370), and a second operating position, in which the shut-off member (395) is adapted to place the first inlet port (375) in communication with the second outlet port (390) and, at the same time, to place the second inlet port (385) in communication with the first outlet port (380).

12. A steering apparatus (100) according to claim 1, wherein the hydrostatic steering unit (155) comprises at least:
- an inlet port (180) for a hydraulic fluid,
- an outlet port (185) for the hydraulic fluid,
- a first connection port (190) hydraulically connected with the steering actuator (105),
- a second connection port (195) hydraulically connected with the steering actuator (105),
- a distributor (160) adapted to assume a plurality of operating configurations, of which a first operating configuration, in which it places the inlet port (180) in hydraulic connection with the first connection port (190) and the outlet port (185) with the second connection port (195), and a second operating configuration, in which it places the inlet port (180) in hydraulic connection with the second connection port (195) and the outlet port (185) with the first connection port (190),
- a dosing device (165) adapted to dose the amount of hydraulic fluid transferred from the inlet port (180) towards the first or second connection port (190, 195), when the distributor (160) is in the first or second operating configuration,
**characterised in that** the hydrostatic steering unit (155) comprises an amplification line (420) placed between the connection ports (190, 195) and the inlet port (180), in parallel to the dosing device (165), and comprising a flow regulating device (425) of electro-actuated type.
